# NEUE EUROPÄISCHE PATENTSCHRIFT

(11) **EP 1 128 892 B2**
(45) Veröffentlichungstag und Bekanntmachung des Hinweises auf die Entscheidung über den Einspruch: **04.01.2006**
(45) Hinweis auf die Patenterteilung: 04.12.2002
(21) Anmeldenummer: 99955750.7
(22) Anmeldetag: 17.09.1999
(51) Int. Cl.: B01D 46/52, B01D 29/01

(54) **PLATTENFILTERELEMENT FÜR EIN LUFTFILTER**
PLATE FILTER ELEMENT FOR AN AIR FILTER
ELEMENT DE FILTRE A PLAQUES POUR FILTRES A AIR

(30) Priorität: 30.09.1998 DE 19844874
(43) Veröffentlichungstag der Anmeldung: 05.09.2001
(73) Patentinhaber: MAHLE Filtersysteme GmbH, 70376 Stuttgart (DE)
(72) Erfinder: SCHNEIDER, Horst, D-71336 Waiblingen (DE); WAIBEL, Hans, D-71686 Remseck (DE)
(74) Vertreter: Bernhard, Uwe
(86) Internationale Anmeldenummer: PCT/DE1999/003016
(87) Internationale Veröffentlichungsnummer: WO 2000/018489

(56) Entgegenhaltungen:
- EP-A- 0 383 236
- EP-A- 0 685 251
- DE-A- 19 524 677
- DE-A- 19 530 435

## Beschreibung

Die Erfindung betrifft ein Plattenfilterelement für ein Luftfilter mit einem zick-zack-förmig gefalteten Bahnenmaterial aus einem Aktivkohlevlies, das eine Oberseite aus Vliesmaterial und eine Unterseite aus Vliesmaterial sowie dazwischen angeordnete Aktivkohlepartikel aufweist.

Aus der DE 195 24 677 A1 ist ein Plattenfilterelement bekannt, das eine zick-zack-förmig gefaltete Bahnmaterial aufweist. Bei diesem Filterelement ist eine Endfalte des Bahnmaterials mit einer dazu benachbarten Falte verklebt. Hierbei werden die einander gegenüberliegenden Seiten der benachbarten Falten durch eine Verklebung miteinander verbunden, um eine Versiegelung des Bahnenmaterials zu erzielen.

Andere bekannte Plattenfilterelemente weisen ein zick-zack-förmig gefaltetes Bahnenmaterial auf, das aus einem Aktivkohlevlies gebildet ist. Ein solches Aktivkohlevlies weist wenigstens eine Oberseite aus Vliesmaterial und eine Unterseite aus Vliesmaterial auf, wobei zwischen Ober- und Unterseite Aktivkohle-Partikel angeordnet sind. Die Aktivkohle-Partikel können dabei mittels Klebstoff an den einander zugewandten Innenseiten der Vliesoberseite und der Vliesunterseite anhaften. Dieser Schichtaufbau bildet einen verformbaren Vlies-Verbund, wobei die Aktivkohle-Partikel zwischen den Vliesschichten relativ lose gehaltert sind, so daß sich insbesondere an den Randbereichen des Aktivkohlevlieses Aktivkohie-Partikel vom Vlies-Verbund lösen können.

An quer zu den Falten verlaufenden Seitenrändem des Bahnenmaterials sind Seitenbänder oder Seitenleisten befestigt, die unter anderem dazu dienen, dem zick-zack-förmig gefalteten Aktivkohlevlies eine Formstabilität zu geben. Durch diese das gefaltete Aktivkohlevlies seitlich einfassenden Seitenleisten kann außerdem ein seitliches Austreten von Aktivkohle-Partikeln aus dem Verbund verhindert werden. Die Seitenleisten sollen außerdem regelmäßig eine Dichtfunktion übernehmen.

Bei den Endfalten des gefalteten Aktivkohlevlieses können jedoch weiterhin Aktivkohle-Partikel aus dem Vlies-Verbund austreten. Außerdem kann der Vlies-Verbund an den Endfalten relativ leicht beschädigt werden, insbesondere aufspleißen. Das heißt, die Vliesschichten können sich voneinander lösen. Das Einbringen eines auf diese Weise beschädigten Aktivkohlevlieses in eine für die Endfalte vorgesehene Einfassung entweder in einem speziellen Rahmen des Plattenfilterelementes oder direkt in einem Filtergehäuse, wird dadurch erschwert. Die Endfalte des Bahnenmaterials ist durch ihre Anbindung an die Seitenleisten zudem einer relativ hohen Biegespannung ausgesetzt, die insbesondere in der Mitte zwischen den Seitenleisten ein Auswölben dieser Endfalte in Längsrichtung der Seitenleisten bewirken. Durch diese Spannung wird das Aufspleißen bzw. das Auftrennen der Schichten des Aktivkohlevlies-Verbundes begünstigt bzw. unterstützt.

Die vorliegende Erfindung beschäftigt sich mit dem Problem, bei einem Plattenfilterelement der eingangs genannten Art die Formstabilität des Aktivkohlevlieses zu verbessern.

Dieses Problem wird erfindungsgemäß durch ein Plattenfilterelement mit den Merkmalen des Anspruches 1 gelöst.

Die Erfindung beruht auf dem allgemeinen Gedanken, an derfreiliegenden Endkante des Bahnenmaterials die Oberseite des Aktivkohlefilters mit der Unterseite des Aktivkohlevlieses dicht zu verbinden, so daß einerseits ein Aufspleißen des Aktivkohlevlies-Verbundes bzw. ein Lösen der Oberschicht von der Unterschicht erschwert und andererseits ein Austreten von Aktivkohle-Partikeln aus dem Aktivkohlevlies im Bereich der Endfalte verhindert wird. Um dies zu erreichen, schlägt die Erfindung vor, die Endfalte bzw. deren Endkante mit einer Versiegelung zu versehen. Eine solche Versiegelung wird dabei durch eine Verklebung oder durch eine Verschweißung der Oberseite mit der Unterseite des Aktivkohlevlieses erreicht.

Vorzugsweise wird die Verklebung zur Ausbildung der Versiegelung mit Hilfe eines Klebstoffes ausgebildet, der dazu die miteinander zu verklebenden Elemente zumindest teilweise durchdringt und einbettet. Alternativ kann die Verklebung auch dadurch erzielt werden, daß eines der miteinander zu verklebenden Elemente durch Schmelzen mehr oder weniger verflüssigt wird, wobei das verflüssigte Element in ein nicht verflüssigtes Element eindringt und dieses zumindest teilweise durchdringt und in der Schmelze einbettet.

Eine Verschweißung zur Ausbildung der Versiegelung kann z.B. dadurch erzielt werden, daß die miteinander zu verschweißenden Elemente durch Schmelzen verflüssigt werden und dabei miteinander verschmelzen.

Um die Formstabilität der Endfalte weiter zu steigern, wird bei der Erfindung vorgeschlagen, das Bahnenmaterial im Bereich der Versiegelung zu komprimieren.

Auf diese Weise wird die Festigkeit der zwischen den miteinander verbundenen Elementen ausgebildeten Anbindung erhöht.

Für die Herstellung des erfindungsgemäßen Plattenfilterelementes wird außerdem ein Verfahren mit den Merkmalen des Anspruches 10 vorgeschlagen. Demnach wird für die Herstellung eines erfindungsgemäßen Plattenfifierelementes ein Ultraschall-Verschweißen bevorzugt, wobei das Ultraschall-"Verschweißen" hier sowohl eine Verschweißung, bei der zwei miteinander zu verbindende Elemente mehr oder weniger verflüssigt werden und so aneinander anschmelzen oder miteinander verschmelzen, als auch eine Verklebung umfaßt, bei der eines von zwei miteinander zu verbindenden Elementen mehr oder weniger verflüssigt wird und das nicht verflüssigte Element zumindest teilweise durchdringt und in der gebildeten Schmelze einbettet.

Entsprechend einer bevorzugten Ausführungsform des erfindungsgemäßen Verfahrens wird auf den für die Endfalte vorgesehenen Bereich des Bahnenmaterial zunächst ein Endband aufgelegt, das mit einer Heißschmelzkleber-Schicht ausgestattet ist. Durch den daran anschließenden Ultraschall-Schweißvorgang wird diese Heißschmelzkleber-Schicht verflüssigt, so daß der flüssige Heißschmefzklebersowohl das aus einem Vliesmaterial gebildete Endband als auch das Oberseitenvlies und das Unterseitenvlies des Aktivkohlevlieses sowie dazwischen angeordnete Aktivkohle-Partikel durchdringt, wobei diese miteinanderzu verbindenden Elemente in den Heißschmelzkleber eingebettet werden. Auf diese Weise wird eine effiziente Versiegelung mit großerformstabilisierender Wirkung erreicht. Dieses Verfahren kann vorzugsweise dadurch verbessert werden, daß während des Ultraschall-Schweißvorganges die miteinander zu verbindenden Bestandteile, wie z.B. das Endbandvlies und das Aktivkohlevlies, komprimiert werden.

Weitere wichtige Merkmale und Vorteile des erfindungsgemäßen Plattenfilterelementes ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert. Es zeigen, jeweils schematisch,
- Fig. 1: eine Draufsicht auf ein Plattenfilterelement nach der Erfindung,
- Fig. 2: eine geschnittene Seitenansicht entsprechend den Schnittlinien II in Fig. 1 bei einem vergrößerten Maßstab.

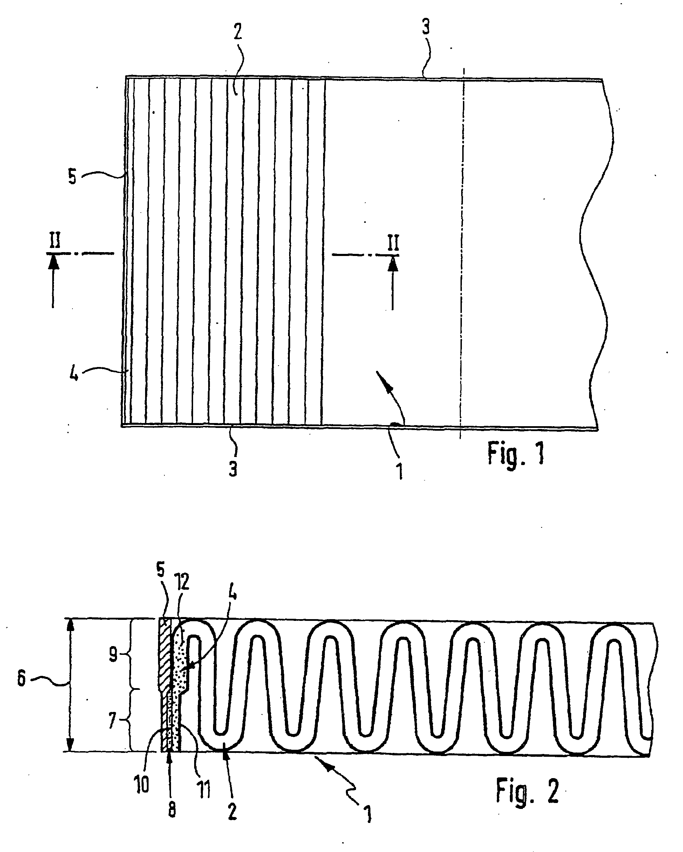

Entsprechend Fig. 1 weist ein erfindungsgemäßes Plattenfilterelement 1 ein zick-zack-förmig gefaltetes Bahnenmaterial aus einem Aktivkohlevlies 2 auf. Quer zu den Falten des Aktivkohlevlieses 2 ist das Plattenfilterelement 1 durch Seitenleisten oder Seitenbänder 3 seitlich eingefaßt. Vorzugsweise bestehen die Seitenbänder 3 aus einem Vliesmaterial und sind mit den Enden der Falten verschweißt oder verklebt. Durch die Befestigung der Seitenbänder 3 an den Falten des Aktivkohlevlieses 2 kann für die Zick-Zack-Form des gefalteten Aktivkohlevlieses 2 eine Formstabilität gewährleistet werden. Außerdem bilden die Seitenbänder 3 eine Dichtung.

An einer in den Fig. 1 und 2 dargestellten linken Endfalte 4 ist ein Endband 5 befestigt. Das Endband 5 weist dabei etwa dieselbe Höhe 6 wie die Endfalte 4 auf. Die Anbindung des Endbandes 5 an die Endfalte 4 erfolgt jedoch nicht über die gesamte Höhe 6, sondern nur in einem Teilbereich 7, der in Fig. 2 mit einer geschweiften Klammer gekennzeichnet ist und sich etwa über die untere Hälfte der Höhe 6 erstreckt.

Entsprechend Fig. 2 ist das En dband 5 auf der von den übrigen Falten des Aktivkohlevlieses 2 abgewandten Außenseite der Endfalte 4 angebracht. Ebenso ist eine Ausführungsform möglich, bei der das Endband 5 auf der den übrigen Falten des Aktivkohlevlieses 2 zugewandten Innenseite der Endfalte 4 befestigt ist.

Im Teilbereich 7, in dem die Anbindung des Endbandes 5 an die Endfalte 4 ausgebildet ist, sind die Dicke der Endfalte 4 und die des Endbandes 5 gegenüber dem außerhalb des Teilbereiches 7 liegenden Bereichen reduziert. Diese Dickereduzierung beruht auf einer Materialkomprimierung, die während der Ausbildung der Anbindung des Endbandes 5 an die Endfalte 4 durchgeführt wird.

Um dem freien Ende der Endfafte 4 eine erhöhte Formstabilität zu geben und um den Austritt von Aktivkohle-Partikeln 12 aus dem Aktivkohlevlies 2 zu reduzieren, ist die Endfalte 4 im Teilbereich 7 versiegelt. Diese Versiegelung wird bei der in Fig. 2 dargestellten bevorzugten Ausführungsform durch eine Verklebung eines Oberseitenvlieses 10 mit einem Unterseitenvlies 11 des Aktivkohlevlieses 2 durch einen Klebstoff gebildet. Zu diesem Zweck trägt das Endband 5 eine Heißschmelzkleber-Schicht 8.

Das Endband 5 wird zur Ausbildung der Versiegelung so auf die Endfalte 4 aufgelegt, daß die Heißschmelzkleber-Schicht 8 an der Endfafte 4 zur Anlage kommt. Die aneinanderliegenden Elemente (Endband 5 mit Heißschmelzkleber-Schicht 8, Endfalte 4) werden zwischen eine Sonotrode und einen Amboß einer Ultraschall-Schweißvorrichtung eingebracht und einem Ultraschall-Schweißvorgang unterzogen. Dabei wird zusätzlich ein erhöhter Druck auf die miteinander zu verbindenden Elemente ausgeübt, so daß die weiter oben genannte Komprimierung stattfindet.

Durch den Uttraschall-Schweißvorgang wird bei einer bevorzugten Ausführungsform ausschließlich die Heißschmelzkleber-Schicht 8 mehr oder weniger verflüssigt. Gegebenenfalls kann auch ein Heißschmelzkleber im Aktivkohlevlies verflüssigt werden, der dort zum Haften der Aktivkohle-Partikel dient. Der verflüssigte Heißschmelzkleber dringt in die Vliesmaterialien, das heißt in das vorzugsweise aus einem Vlies gebildete Endband 5 und in die Vfiesschichten des Aktivkohlevlieses 2 ein bzw. durchdringt diese Vliesmaterialien zumindest teilweise. Darüber hinaus durchdringt der flüssige Heißschmelzkleber die im Aktivkohlevlies zwischen der Oberseite 10 und der Unterseite 11 des Aktivkohlevlieses 2 angeordneten Aktivkohle-Partikel 12. Die nicht verflüssigten Bestandteile werden somit in der Schmelze des Heißschmelzklebers eingebettet. Sobald der Heißschmelzkleber abkühlt, bildet sich ein hochfester Verbund aus, durch den zum einen das freie Ende der Endfafte 4 versiegelt ist und durch den zum anderen das Endband 5 an die Enfalte 4 angebunden ist.

Ein sich an den an die Endfalte 4 angebundenen Teilbereich 7 anschließender Abschnitt 9 des Endbandes 5 kann als Dichtung dienen, die das Plattenfilterelement 1 gegenüber einem nicht dargestellten Rahmenteil des Plattenfilterelementes 1, in das die Endfalte 4 eingebracht wird, oder gegenüber einem ebenfalls nicht dargestellten Filtergehäuse abdichtet, in welches das Filterelement 1 - dann ohne das vorgenannte Rahmenteil - eingebracht wird. Falls das Endband 5 in Abschnitt 9 eine derartige Dichtfunktion aufweisen soll, ist es vorzugsweise aus einem Vliesmaterial hergestellt.

Falls eine derartige Dichtfunktion durch ein Endband 5 nicht erforderlich ist, braucht sich auch das Endband 5 nicht über die gesamte Höhe 6 der Endfalte 4 zu erstrecken. Darüber hinaus kann dann auch das Endband 5 selbst als Heißschmelzkleber ausgebildet sein. Ebenso ist eine Ausführung möglich, bei der das Endband 5 aus einem schmelzbaren Vlies besteht, das durch das Uitraschall-Schweißen verflüssigt wird und in das Aktivkohlevlies eindringt bzw. dieses durchdringt und die ungeschmolzenen bzw. unverflüssigten Bestandteile in der Schmelze einbettet. In diesem Fall kann eine spezielle Heißschmelzkleber-Schicht auf dem Endband 5 entfallen.

## Patentansprüche

1. Plattenfilterelement für ein Luftfilter mit einem zick-zack-förmig gefalteten Bahnenmaterial aus einem Aktivkohlevlies, das eine Oberseite aus Vliesmaterial und eine Unterseite aus Vliesmaterial sowie dazwischen angeordnete Aktivkohlepartikel aufweist, wobei ein freies Ende einer Endfalte (4) des Bahnenmaterials eine Versiegelung aufweist, die durch eine Verklebung oder durch eine Verschweißung der Oberseite (10) mit der Unterseite (11) des Aktivkohlevlieses (2) gebildet ist, wobei das Bahnenmaterial im Bereich (7) der Versiegelung unter Ausbildung einer Dickenreduzierung der Endfalte (4) gegenüber dem außerhalb des Versiegelungsbereichs (7) liegenden Bahnenmaterials komprimiert ist.

2. Plattenfilterelement nach Anspruch 1,
**dadurch gekennzeichnet,**
**daß** die Verklebung mit einem Klebstoff (8) oder durch ein Schmelzen wenigstens eines der miteinander zu verklebenden Elemente gebildet ist.

3. Plattenfilterelement nach Anspruch 2,
**dadurch gekennzeichnet,**
**daß** das geschmolzene Element in ein nicht geschmolzenes Element (4, 5, 12) der miteinander zu verklebenden Elemente (4, 5, 12) eindringt oder dieses zumindest teilweise durchdringt und in der Schmelze einbettet.

4. Plattenfilterelement nach Anspruch 1,
**dadurch gekennzeichnet,**
**daß** die Verschweißung durch ein Verschmelzen der miteinander zu verschweißenden Elemente gebildet ist.

5. Plattenfilterelement nach einem der Ansprüche 1 bis 4,
**dadurch gekennzeichnet,**
**daß** die Endfalte (4) mit einem Endband (5) versehen ist, das durch die Verklebung oder durch die Verschweißung an der Endfalte (4) befestigt ist.

6. Plattenfilterelement nach Anspruch 5,
**dadurch gekennzeichnet,**
**daß** das Endband (5) etwa dieselbe Höhe (6) aufweist wie die Endfalte (4) und daß sich die Verklebung bzw. Verschweißung nur über einen Teil (7) der Höhe (6) der Endfalte (4) erstreckt, wobei das Endband (5) außerhalb der Verklebung bzw. Verschweißung als Dichtung (9) dient.

7. Plattenfilterelement nach Anspruch 5 oder 6,
**dadurch gekennzeichnet,**
**daß** das Endband (5) aus einem Vliesmaterial besteht.

8. Plattenfilterelement nach einem der Ansprüche 2 bis 7,
**dadurch gekennzeichnet,**
**daß** der Klebstoff (8) ein Heißschmelzkleber ist.

9. Plattenfilterelement nach einem der Ansprüche 1 bis 8,
**dadurch gekennzeichnet,**
**daß** das Bahnenmaterial quer zu seinen Falten zwischen zwei aus einem Vliesmaterial gebildeten Seitenbahnen (3) eingefaßt ist, die durch Verklebung oder durch Verschweißung an dem Bahnenmaterial befestigt sind, und daß das Endband (5) an den Seitenbahnen (3) befestigt ist.

10. Verfahren zum Herstellen eines Plattenfilters nach einem der Ansprüche 1 bis 9,
**dadurch gekennzeichnet,**
**daß** die Versiegelung in einem für die Endfalte (4) vorgesehenen Bereich des Bähnenmaterials durch einen Ultraschall-Schweißvorgang ausgebildet wird, bei dem zumindest ein Bestandteil (8) der miteinander zu verbindenden Elemente (4, 5, 8, 12) mehr oder weniger verflüssigt wird, wobei verflüssigte Bestandteile (8) aneinander anschmelzen oder miteinander verschmelzen und nicht verflüssigte Bestandteile (4, 5, 12) zumindest teilweise von dem mindestens einen verflüssigten Bestandteil (8) durchdrungen und in diesen eingebettet werden, wobei während des Ultraschall-Schweißvorganges die miteinander zu verbindenden Elemente (4, 5, 8, 12) komprimiert werden.

11. Verfahren nach Anspruch 10,
**dadurch gekennzeichnet,**
**daß** durch den Ultraschall-Schweißvorgang ein im Aktivkohlevlies (2) enthaltener Heißschmelzkleber verflüssigt wird.

12. Verfahren nach einem der Ansprüche 10 oder 11,
**dadurch gekennzeichnet,**
**daß** durch den Ultraschall-Schweißvorgang eine auf die Endfalte (4) aufgebrachte Heißschmelzkleber-Schicht (8) verflüssigt wird.

13. Verfahren nach Anspruch 12,
**dadurch gekennzeichnet,**
**daß** die Heißschmelzkleber-Schicht (8) an einem auf die Endfalte aufgebrachten Endband (5) angebracht ist.

14. Verfahren nach einem der Ansprüche 10 bis 13,
**dadurch gekennzeichnet,**
**daß** durch den Ultraschall-Schweißvorgang ein im Aktivkohlevlies (2) enthaltenes Vliesmaterial (10, 11) mehr oder weniger verflüssigt wird.

15. Verfahren nach einem der Ansprüche 10 bis 14,
**dadurch gekennzeichnet,**
**daß** durch den Ultraschall-Schweißvorgang ein auf die Endfalte (4) aufgebrachtes, aus einem Vliesmaterial bestehendes Endband (5) mehr oder weniger verflüssigt wird.

## Claims

1. A plate filter element for an air filter, having a zigzag-folded web material made of an active carbon nonwoven, which has an upper side of nonwoven material and an underside of nonwoven material and active carbon particles arranged between them, a free end of an end fold (4) of the web material having a seal which is formed by adhesively bonding or by welding the upper side (10) to the underside (11) of the active carbon nonwoven (2), wherein the web material is compressed in the area (7) of the seal while the thickness of the end fold (4) is reduced with respect to the web material lying outside the area (7) of the seal.

2. The plate filter element as claimed in claim 1, **characterized in that** the adhesive bond is formed with an adhesive (8) or by fusing at least one of the elements to be adhesively bonded to each other.

3. The plate filter element as claimed in claim 2, **characterized in that** the molten element penetrates into a non-molten element (4, 5, 12) of the elements (4, 5, 12) to be bonded to each another, or penetrates at least partially through the latter and embeds it in the melt.

4. The plate filter element as claimed in claim 1, **characterized in that** the weld is formed by fusing the elements to be welded to each other.

5. The plate filter element as claimed in one of claims 1 to 4, **characterized in that** the end fold (4) is provided with an end band (5) which is fixed to the end fold (4) by the adhesive bonding or by the welding.

6. The plate filter element as claimed in claim 5, **characterized in that** the end band (5) has approximately the same height (6) as the end fold (4), and **in that** the adhesive bond or weld extends over only part (7) of the height (6) of the end fold (4), the end band (5) outside the adhesive bond or weld serving as a seal (9).

7. The plate filter element as claimed in claim 5 or 6, **characterized in that** the end band (5) consists of a nonwoven material.

8. The plate filter element as claimed in one of claims 2 to 7, **characterized in that** the adhesive (8) is a hot-melt adhesive.

9. The plate filter element as claimed in one of claims 1 to 8, **characterized in that** the web material, transversely with respect to its folds, is enclosed between two side webs (3) which are formed of a nonwoven material and which are fixed to the web material by adhesive bonding or by welding, and **in that** the end band (5) is fixed to the side webs (3).

10. A process for producing a plate filter as claimed in one of claims 1 to 9, **characterized in that** the seal is formed, in an area of the web material provided for the end fold (4), by means of an ultrasonic welding operation in which at least one component (8) of the elements (4, 5, 8, 12) to be joined to one another is more or less liquefied, liquefied components (8) fusing to one another or melting together with one another and non-liquefied components (4, 5, 12) being penetrated through, at least partially, by the at least one liquefied component (8) and embedded in the latter, the elements (4, 5, 8, 12) to be joined together being compressed during the ultrasonic welding operation.

11. The process as claimed in claim 10, **characterized in that** the ultrasonic welding operation liquefies a hot-melt adhesive contained in the active carbon nonwoven (2).

12. The process as claimed in either of claims 10 and 11, **characterized in that** the ultrasonic welding operation liquefies a hot-melt adhesive layer (8) applied to the end fold (4).

13. The process as claimed in claim 12, **characterized in that** the hot-melt adhesive layer (8) is applied to an end band (5) attached to the end fold.

14. The process as claimed in one of claims 10 to 13, **characterized in that** the ultrasonic welding operation more or less liquefies a nonwoven material (10, 11) contained in the active carbon nonwoven (2).

15. The process as claimed in one of claims 10 to 14, **characterized in that** the ultrasonic welding operation more or less liquefies an end band (5) which is applied to the end fold (4) and consists of a nonwoven material.

## Revendications

1. Elément filtrant à plaques pour un filtre à air avec un matériau en feuille plié en zigzag en un voile de charbon actif, qui présente un côté supérieur en matériau en voile et un côté inférieur en matériau en voile, ainsi que des particules de charbon actif disposées dans l'espace intermédiaire, une extrémité libre d'un pli d'extrémité (4) du matériau en feuille présentant un scellement, qui est formé par un collage ou par un soudage du côté supérieur (10) avec le côté inférieur (11) du voile de charbon actif (2), le matériau en feuille étant comprimé dans la zone (7) du scellement contre le matériau en feuille s'étendant à l'extérieur de la zone (7) du scellement avec formation d'une réduction d'épaisseur du pli d'extrémité (4).

2. Elément filtrant à plaques suivant la revendication 1, **caractérisé en ce que** le collage est formé par une colle (8) ou par une fusion d'au moins l'un des éléments à assembler entre eux.

3. Elément filtrant à plaques suivant la revendication 2, **caractérisé en ce que** l'élément fondu pénètre dans un élément non fondu (4, 5, 12) des éléments (4, 5, 12) à assembler entre eux, ou pénètre au moins en partie au travers de cet élément et l'enrobe dans la masse fondue.

4. Elément filtrant à plaques suivant la revendication 1, **caractérisé en ce que** le soudage est formé par un fusionnement des éléments à souder entre eux.

5. Elément filtrant à plaques suivant l'une des revendications 1 à 4, **caractérisé en ce que** le pli d'extrémité (4) est muni d'une bande d'extrémité (5), qui est fixée sur le pli d'extrémité (4) par le collage ou par le soudage.

6. Elément filtrant à plaques suivant la revendication 5, **caractérisé en ce que** la bande d'extrémité (5) présente à peu près la même hauteur (6) que le pli d'extrémité (4), et **en ce que** le collage ou le soudage ne s'étend que sur une partie (7) de la hauteur (6) du pli d'extrémité (4), la bande d'extrémité (5) servant de joint d'étanchéité (9) à l'extérieur du collage ou du soudage.

7. Elément filtrant à plaques suivant l'une des revendications 5 et 6, **caractérisé en ce que** la bande d'extrémité (5) se compose d'un matériau en voile.

8. Elément filtrant à plaques suivant l'une des revendications 2 à 7, **caractérisé en ce que** la colle (8) est une colle thermofusible.

9. Elément filtrant à plaques suivant l'une des revendications 1 à 8, **caractérisé en ce que** le matériau en feuille est entouré transversalement à ses plis par deux bandes latérales (3) formées d'un matériau en voile, qui sont fixées par collage ou par soudage sur le matériau en feuille, et **en ce que** la bande d'extrémité (5) est fixée sur les bandes latérales (3).

10. Procédé de fabrication d'un filtre à plaques suivant l'une des revendications 1 à 9, **caractérisé en ce que** le scellement est réalisé, dans une zone du matériau en feuille prévue pour le pli d'extrémité (4), par une opération de soudage par ultrasons lors de laquelle au moins un composant (8) des éléments (4, 5, 8, 12) à assembler entre eux est plus ou moins liquéfié, des composants liquéfiés (8) fondant les uns sur les autres ou fusionnant entre eux, et des composants (4, 5, 12) non liquéfiés étant traversés au moins en partie par le composant (8), au moins, liquéfié, et étant enrobés dans ce dernier, les éléments (4, 5, 8, 12) à assembler entre eux étant comprimés pendant l'opération de soudage par ultrasons.

11. Procédé suivant la revendication 10, **caractérisé en ce qu'**une colle thermofusible contenue dans le voile de charbon actif (2) est liquéfiée par l'opération de soudage par ultrasons.

12. Procédé suivant l'une des revendications 10 et 11, **caractérisé en ce qu'**une couche de colle thermofusible (8) appliquée sur le pli d'extrémité (4) est liquéfiée par l'opération de soudage par ultrasons.

13. Procédé suivant la revendication 12, **caractérisé en ce que** la couche de colle thermofusible (8) est placée sur une bande d'extrémité (5) appliquée sur le pli d'extrémité.

14. Procédé suivant l'une des revendications 10 à 13, **caractérisé en ce qu'**un matériau en voile (10, 11) contenu dans le voile de charbon actif (2) est plus ou moins liquéfié par l'opération de soudage par ultrasons.

15. Procédé suivant l'une des revendications 10 à 14, **caractérisé en ce qu'**une bande d'extrémité (5), composée d'un matériau en voile et appliquée sur le pli d'extrémité (4), est plus ou moins liquéfiée par l'opération de soudage par ultrasons.
